# EUROPÄISCHE PATENTSCHRIFT

(11) **EP 0 782 787 B1**
(45) Veröffentlichungstag und Bekanntmachung des Hinweises auf die Patenterteilung: **10.06.1998**
(21) Anmeldenummer: 95929777.1
(22) Anmeldetag: 07.09.1995
(51) Int. Cl.: H02P 5/168, H02H 7/093, H02P 6/06, G01P 3/48

(54) **VERFAHREN UND SCHALTUNGSANORDNUNG ZUM REGELN VON VENTILATOREN**
PROCESS AND CIRCUIT FOR CONTROLLING FANS
PROCEDE ET CIRCUIT DE REGULATION DE VENTILATEURS

(30) Priorität: 20.09.1994 DE 4433537
(43) Veröffentlichungstag der Anmeldung: 09.07.1997
(73) Patentinhaber: Siemens Nixdorf Informationssysteme AG, 33106 Paderborn (DE)
(72) Erfinder: ADAM, Jürgen, D-89331 Burgau (DE); BUSCH, Peter, D-86179 Augsburg (DE)
(74) Vertreter: Fuchs, Franz-Josef, Dr.-Ing.
(86) Internationale Anmeldenummer: DE9501225
(87) Internationale Veröffentlichungsnummer: WO9609688

(56) Entgegenhaltungen:
- EP-A- 0 352 593
- DE-A- 2 516 272
- DE-A- 2 714 231
- US-A- 4 418 298

## Beschreibung

Die Erfindung betrifft ein Verfahren und eine Schaltungsanordnung zum Regeln von Ventilatoren.

Bei Stromversorgungen mit Ventilatorkühlung wird oft die Geräuschentwicklung als zu laut empfunden. Diese Geräuschentwicklung hängt unter anderem von der Drehzahl des Ventilators ab. Diese Drehzahl ist von der Art der Achslagerung und weiteren mechanischen und elektrischen Toleranzen abhängig. Da die zu kühlenden Bauteile einen Mindestluftstrom und daher eine Mindestdrehzahl des Ventilators erfordern, darf diese minimale Drehzahl durch eine minimale Ventilatorbetriebsspannung nicht unterschritten werden.

Bei der Einstellung der minimalen Ventilatorbetriebsspannung ist die Drehzahltoleranz des Ventilators zu berücksichtigen. Die minimale Ventilatorbetriebsspannung muß daher in der Weise eingestellt werden, daß die Nenndrehzahl um die Drehzahltoleranz höher ist als die minimale Drehzahl. Ein weiteres Problem ist, daß die minimale Ventilatorbetriebsspannung im Datenblatt des Herstellers aus Toleranzgründen meist relativ hoch angesetzt ist. Aus diesen Gründen liegt bei geringem Kühlbedarf im typischen Fall die Drehzahl eines solchen Ventilators höher, als für die Aufgabe der Kühlung erforderlich wäre.

Zur Absenkung der Drehzahl des Ventilators ist allgemein bekannt, teure Ventilatoren mit Kugellager einzusetzen, da diese Ventilatoren eine kleinere Drehzahltoleranz haben und deshalb die nötige Drehzahlreserve kleiner sein kann. Nachteilig hierbei ist, daß das Problem der minimalen Ventilatorbetriebsspannung durch diese Maßnahme nicht behoben ist. Eine Drehzahlregelung bei einem preisgünstigen Standardventilator ist mit herkömmlicher Technologie, beispielsweise mit einem Drehzahlsensor, einem Frequenz/Spannungswandler, einem Soll/Istwertvergleicher und einer Leistungsendstufe, zu teuer.

Um die Drehzahl eines elektronisch kommutierten Ventilators zu erfassen, ist bekannt, die Kurvenform des Eingangsstromes auszuwerten. Bei jeder vollen Umdrehung des Ventilatorrotors werden die Erregerwicklungen je nach Position des Rotors mehrmals ein- und ausgeschaltet. Diese Schaltvorgänge sind als Stromsprünge großer Steilheit im Eingangsstrom erkennbar. Sie werden in Spannungssprünge umgewandelt und können nach einer Hochpaßfilterung und Signalformung als Ersatz für die Signale eines Drehzahlsensors verwendet werden. Auf eine solche Methode ist beispielsweise in dem im Industrie-Anzeiger, 41/93, Seiten 46 und 47 erschienen Artikel: "Postmoderne Maßnahme" von Eduard Rüsing Bezug genommen.

Aus US-A-4 418 298 ist eine Drehzahlregelung für einen elektrischen Motor beschrieben, bei welcher der Motor mit einer Schlitzscheibe verbunden ist, aus welcher High-Low-Signale hergeleitet werden, die die Motordrehzahl wiedergeben. Die High-Low-Signale weisen ein Impuls-Pausen-Verhältnis von 50% auf. Bei jedem High-Signal werden Impulse jeweils gleicher Länge eines zweiten Signals erzeugt, die ausgehend von einer Nenndrehzahl des elektrischen Motors rechtzeitig vor einem jeweils nächsten Impuls wieder abgeschaltet sind. Durch Drehzahlschwankungen des elektrischen Motors verkürzen sich die Längen der mittels der Schlitzscheibe erzeugten High-Low-Signale. Da die Impulslängen des zweiten Signals konstant sind, variieren die Längen der Impulspausen des zweiten Signals abhängig von den Drehzahlschwankungen des elektrischen Motors. Das zweite Signal wird über eine Lade-/Entladeschaltung geführt, die abhängig von den konstanten Impulslängen und den variablen Impulspausen eine entsprechende Ansteuerspannung für den elektrischen Motor erzeugt. Ausgehend von einer Nenndrehzahl wird bei einem zu langsamen Motor während der verlängerten Impulspausen des zweiten Signals eine verlängerte Zeit ein für die Ansteuerung des elektrischen Motors maßgebender Kondensator geladen. Die Ansteuerspannung für den elektrischen Motor erhöht sich dadurch und der Motor beschleunigt. Ist der Motor zu schnell, wird während der verkürzten Impulspausen des zweiten Signals der besagte Kondensator eine verkürzte Zeit geladen und damit gegenüber dem Sollzustand insgesamt entladen. Die Ansteuerspannung für den elektrischen Motor wird dadurch erniedrigt und der Motor verlangsamt sich.

Diese Art der Ansteuerung ist wegen der Schlitzscheibe aufwendig. Sie ist aber auch unsicher. Weist beispielsweise der Motor einmal kurzzeitig eine soweit erhöhte Drehzahl auf, daß die Periodendauer des ersten Signals kleiner ist als die Periodendauer des zweiten Signals, dann reduziert sich die Geschwindigkeit des Motors nicht mehr, sondern wird im Gegenteil noch erhöht. Die Periodendauer des ersten Signals wird nämlich kleiner als die Periodendauer des zweiten Signals und ein an sich notwendiger nachfolgender neuer Impuls des zweiten Signals wird ausgelassen. Die Folge davon ist, daß die nachfolgende Impulspause des zweiten Signals überproportional lang wird, in der der oben angesprochene Kondensator aufgeladen wird. Die Ansteuerspannung für den Motor erhöht sich weiter, so daß der Motor letztlich auf der zweifachen Nenndrehzahl einrastet. Tritt dieser Fall weitere Male auf, rastet die Drehzahl jeweils um eine weitere Stufe höher ein. Unabhängig von diesem Problem weisen die Spannungsschwankungen am elektrischen Motor grundsätzlich erhöhte Werte auf.

Aus EP-A-0 352 593 ist zwar eine Ansteuerschaltung für einen elektrischen Motor ohne Schlitzscheibe bekannt. Diese Ansteuerschaltung ist aber im wesentlichen dafür ausgelegt, den Betrieb oder den Ausfall des elektrischen Motors zu erkennen.

Aufgabe der Erfindung ist es, zum Regeln von elektrischen Motoren, beispielsweise solchen für Ventilatoren zur Kühlung von Bauteilen in Stromversorgungen, ein Verfahren und eine Schaltungsanordnung anzugeben, die gegenüber bekannten Verfahren und Schaltungsanordnungen eine vereinfachte Konstruktion und eine verbesserte Funktion aufweisen.

Diese Aufgabe wird durch ein Verfahren gelöst, das die im Anspruch 1 angegebenen Verfahrensschritte aufweist. Ferner wird diese Aufgabe durch eine Schaltungsanordnung gelöst, die die im Anspruch 2 angegebenen Merkmale aufweist.

Gemäß der vorliegenden Erfindung wird dieses Signal als jeweiliger Startimpulsgeber auf eine Impulserzeugerschaltung geführt, die pro Startimpuls einen monostabilen Ausgangsimpuls gleicher Länge erzeugt. Die von der Impulserzeugerschaltung erzeugten monostabilen Ausgangssimpulse laden und entladen in Summe über eine unsymmetrische Widerstandsbeschaltung eine Speicherkomponente. Die beim Laden und Entladen erzeugten Ladezustandsänderungen bei der Speicherkomponente werden von einem Verstärker erfaßt und zur Regelung des Ventilators herangezogen.

Die Schaltungsanordnung weist eine Impulserzeugerschaltung für monostabile Ausgangsimpulse mit jeweils gleicher Länge auf, wobei im eingeschwungenen Zustand für eine vorgegebene Nenndrehzahl des Ventilators zwischen den einzelnen monostabilen Impulsen Pausen vorhanden sind. Die Schaltungsanordnung weist ferner eine unsymmetrische Widerstandsbeschaltung auf, die zwischen der Impulserzeugerschaltung und einer Speicherkomponente angeordnet ist. Die Speicherkomponente wird durch die monostabilen Impulse des Impulsformers und durch die Pausen zwischen den jeweiligen Impulsen geladen und entladen. Die unsymmetrische Widerstandsbeschaltung sorgt für unterschiedliche Geschwindigkeiten beim Laden bzw. Entladen der Speicherkomponente.

Vorteilhafte Ausgestaltungen der Erfindung sind Gegenstand von Unteransprüchen.

Ist die Länge der von der Impulserzeugerschaltung erzeugten monostabilen Impulse einstellbar, ist die Nenndrehzahl des Ventilators einstellbar. Erfolgt die Einstellung der Länge der vom Impulserzeuger erzeugten monostabilen Impulse durch ein temperaturabhängiges Bauteil, ist eine temperaturabhängige Regelung der Nenndrehzahl des Ventilators möglich.

Nachfolgend wird ein Ausführungsbeispiel der Erfindung anhand einer Zeichnung näher erläutert. Darin zeigen
- Figur 1: eine Schaltungsanordnung einer Ventilatordrehzahlregelung gemäß der Erfindung in Prinzipdarstellung und
- Figur 2: mehrere wesentliche Spannungsverläufe an verschiedenen Punkten der Schaltungsanordnung nach Figur 1.

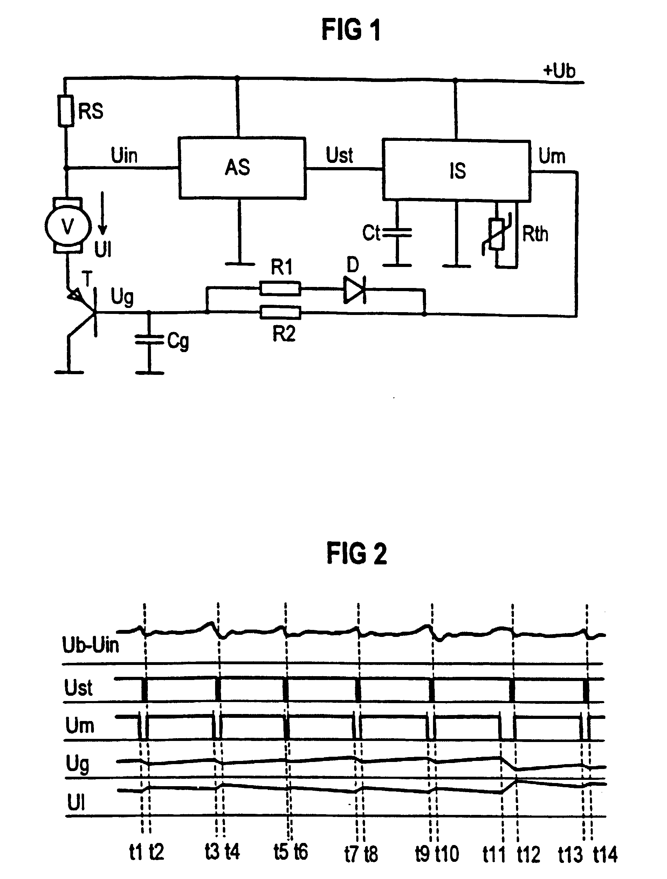

Die Schaltungsanordnung gemäß Figur 1 zeigt einen Ventilator V, der mit einer Spannung UI versorgt wird. Auf einer Anschlußseite des Ventilators V ist in Reihe zum Ventilator V ein Vorwiderstand RS angeordnet, der mit seiner freien Anschlußseite mit einer Versorgungsspannung Ub verbunden ist. Auf der anderen Anschlußseite des Ventilators V ist eine Verstärkerschaltung T ebenfalls in Reihe mit dem Ventilator V angeordnet. Bei der Verstärkerschaltung T handelt es sich gemäß dem Ausführungsbeispiel um einen pnp-Transistor, dessen Emitteranschluß mit dem Ventilator V, dessen Kollektoranschluß mit einem Massebezugspunkt der Schaltungsanordnung und dessen Basisanschluß mit einer Speicherkomponente Cg verbunden ist. Der Basisanschluß des Transistors wird mit einer Spannung Ug versorgt. Die Speicherkomponente Cg ist auf den Massebezugspunkt der Schaltungsanordnung bezogen geschaltet. Gemäß dem Ausführungsbeispiel ist sie durch einen Kondensator gebildet.

Parallel zum Vorwiderstand RS ist eine Auswerteschaltung AS angeordnet, die auf den Massebezugspunkt der Schaltungsanordnung geschaltet ist. An einem Eingang liegen Spannungssprünge Uin und an einem anderen Eingang die Versorgungsspannung Ub an. Am Ausgang der Auswerteschaltung liegt ein Signal Ust an. Der Ausgang der Auswerteschaltung AS ist mit einem Eingang einer Impulserzeugerschaltung IS verbunden. Die Impulserzeugerschaltung IS ist an die Versorgungsspannung Ub angeschlossen. Die Impulserzeugerschaltung IS ist ferner mit dem Massebezugspunkt der Schaltungsanordnung verbunden. Darüberhinaus ist sie mit Bauelementen Ct und Rth verbunden, bei denen es sich um einen Kondensator (Ct) und einen Widerstand (Rth) handelt.

Der Ausgang der Impulserzeugerschaltung IS ist über eine unsymmetrische Widerstandsschaltung R1, R2, D mit dem Basisanschluß des Transistors verbunden, der als Verstärkerschaltung T verwendet ist. Bei der unsymmetrischen Widerstandsschaltung R1, R2, D handelt es sich um eine Parallelschaltung zweier Widerstände (R1, R2) von denen einer gegenüber dem anderen durch eine Diode (D) in einer der möglichen Stromrichtungen entkoppelt geschaltet ist.

Zur Erfassung der Drehzahl des Ventilators V wird der Eingangsstrom des Ventilators V ausgewertet. Bei jeder vollen Umdrehung des Ventilatorrotors werden die Erregerwicklungen je nach Position des Rotors mehrmals ein- und ausgeschaltet. Diese Schaltvorgänge sind als Stromsprünge großer Steilheit im Eingangsstrom erkennbar und werden über den Vorwiderstand RS in Spannungssprünge Uin umgewandelt. Nach einer Hochpaßfilterung und einer Signalformung in der Auswerteschaltung AS können die Signalsprünge Uin in Form des Signals Ust als Ersatz für die Signale eines Drehzahlsensors verwendet werden. Das Signal Ust wird als Startimpuls auf die Impulserzeugerschaltung IS geschaltet, bei der es sich um ein sogenanntes Monoflop handelt. Das Monoflop erzeugt pro Startimpuls einen Impuls vorgegebener Länge. Die Länge des Impulses wird festgelegt durch die Bauelemente Ct und Rth.

An den Ausgängen der Impulserzeugerschaltung IS wird über die unsymmetrische Widerstandsschaltung R1, R2, D die Speicherkomponente Cg angesteuert, die gleichzeitig die Ausgangsimpulse glättet und eine Abweichung von einer Sollperiodendauer der Ventilatorimpulse durch eine unsymmetrische Widerstandsbeschaltung verstärkt. Das verstärkende Verhalten wird dadurch erreicht, daß der Wert des von dem anderen Widerstand R2 entkoppelten Widerstandes R1 der unsymmetrischen Widerstandsschaltung R1, R2, D wesentlich kleiner gewählt wird als R2. Bereits bei geringfügiger Reduzierung der Frequenz der Impulse des Signals Ust werden die Lücken zwischen den Monofloppulsen größer und entladen über den Widerstand R1 die Speicherkomponente Cg. Die an der Speicherkomponente Cg auftretende Spannung Ug stellt ein Maß für die Abweichung der Ventilatordrehzahl von der durch die Impulslänge des Monoflops bestimmbaren Solldrehzahl dar.

Um den Regelkreis zu schließen, wird diese Spannung über ein oder zwei Transistoren dem Ventilator V zugeführt.

Nachfolgend wird bezug auf die Figur 2 genommen.

Das Zeitintervall T4-T6 stellt den Betrieb bei zu hoher Drehzahl dar. Der Monoflop wurde nachgetriggert, das heißt, das Zeitintervall t4-t5 ist kürzer als das Zeitintervall z.B. t2-t3. Die Spannung Ug steigt langsam, die Spannung UI fällt. Die Ventilatordrehzahl wird dadurch wieder auf den Sollwert abgesenkt.

Das Zeitintervall t10-t12 stellt den Betrieb bei zu niedriger Drehzahl dar. Der Monoflop springt nach Ablauf der durch die Bauelemente Ct und Rth vorgegebenen Zeit auf 0V. Die Speicherkomponente Cg wird solange beschleunigt entladen, bis der nächste Ventilatorimpuls, das heißt der nächste Impuls im Signal Ust, eintrifft. Dadurch sinkt die Spannung Ug und die Spannung UI steigt. Der Ventilator V wird wieder schneller, um die Solldrehzahl zu erreichen.

Die Welligkeit der Spannungen Ug und UI und die Abweichung der Zeitintervalle vom Sollwert ist im Diagramm der Figur 2 zur Verdeutlichung größer dargestellt als das im Betrieb normalerweise auftritt.

Die Regelschaltung für den Ventilator stellt sicher, daß der Ventilator stets zuverlässig anläuft und im Betrieb auch unterhalb der vom Hersteller garantierten minimalen Betriebsspannung nicht stehenbleiben kann. Verantwortlich hierfür ist, daß im besagten Fall die Startimpulse ausfallen, der Monoflop den Glättungskondensator auf niedrigere Spannung zieht und dadurch die Spannung über dem Ventilator wieder erhöht wird.

Damit die Drehzahlregelung einstellbar ist, muß die Impulslänge des Monoflops verändert werden. Dies kann z.B. über eine Variation des zeitbestimmenden Gliedes, z.B. des Widerstandes Rth, erfolgen. Wird für diesen Widerstand ein temperaturveränderlicher Widerstand verwendet, wird dadurch eine durch die Temperatur gesteuerte Drehzahlregelung des Ventilators erreicht.

## Patentansprüche

1. Verfahren zum Regeln von Ventilatoren (V), aus deren Kurvenform des Eingangsstroms als Ersatz für die Signale eines Drehzahlmessers Steuerimpulse hergeleitet werden, bei dem ausgehend von einer vorgegebenen Nenndrehzahl des Ventilators (V) die hergeleiteten Steuerimpulse zu einem Signal (Vm) geformt werden, das für jeden Steuerimpuls einen retriggerbaren monostabilen Impuls mit einer gleichen Länge und einer Pause aufweist in einer solchen Einstellung, daß die Länge eines solchen Impulses bezogen auf die Summe der Länge des Impulses und der nachfolgenden Pause größenordnungsmäßig 90 % und mehr ausmacht, bei dem das Signal zum Beeinflussen des Ladezustandes einer Speicherkomponente (Cg) verwendet wird, indem mit einem jeweiligen retriggerbaren monostabilen Impuls und einer nachfolgenden Pause des Signals (Vm) die Speicherkomponente (Cg) unsymmetrisch geladen und entladen wird in der Weise, daß wesentlich schneller entladen als geladen wird, und bei dem die Ladezustandsänderung der Speicherkomponente (Cg) als Steuergröße für die Regelung des Ventilators (V) verwendet wird.

2. Schaltungsanordnung zum Regeln von Ventilatoren (V) mit einer Auswerteschaltung (AS) zum Herleiten von Steuerimpulsen aus der Kurvenform des Eingangsstromes des Ventilators (V) als Ersatz für die Signale eines Drehzahlmessers zum Einstellen des Arbeitszustandes des Ventilators (V) anhand der zeitlichen Abstände der Steuerimpulse, bei der eine Impulserzeugerschaltung (IS) vorgesehen ist, die aus einem jeweiligen Steuerimpuls einen retriggerbaren monostabilen Impuls jeweils gleicher Länge erzeugt mit dem Ergebnis, daß im eingeschwungenen Zustand der Regelung des Ventilators (V) ein Signal (Um) bestehend aus den monostabilen Impulsen mit dazwischen vorhandenen Pausen gegeben ist mit einer solchen Einstellung, daß die Länge eines solchen Impulses bezogen auf die Summe der Länge des Impulses und der nachfolgenden Pause größenordnungsmäßig 90 % und mehr ausmacht, bei der eine ein wesentlich schnelleres Entladen als Laden bewirkende unsymmetrische Widerstandsschaltung (R1, R2, D) vorgesehen ist, die zwischen der Impulserzeugerschaltung (IS) und einer Speicherkomponente (Cg) angeordnet ist, und bei der eine Verstärkerschaltung (T) vorgesehen ist, die an der Speicherkomponente (Cg) angeschlossen und ferner mit dem Ventilator (V) verbunden ist derart, daß Ladezustandsänderungen der Speicherkomponente (Cg) als Folge eines ungleich schnell laufenden Ventilators (V) mit einem solchen Vorzeichen auf den Eingangsstrom des Ventilators (V) wirken, daß die jeweilige Ladezustandsänderung der Speicherkomponente (Cg) rückgängig gemacht wird.

3. Schaltungsanordnung nach Anspruch 2, **dadurch gekennzeichnet**,
daß die Impulserzeugerschaltung (IS) an Bauelemente (Ct, Rth) angeschlossen ist, durch die eine Einstellung der Länge der retriggerbaren monostabilen Impulse durchführbar ist.

## Claims

1. Method for controlling fans (V), from whose input current waveform control pulses are derived as a replacement for the signals of an r.p.m. counter, in which method, on the basis of a prescribed rated rotational speed of the fan (V), the derived control pulses are shaped to form a signal (Um) which has for each control pulse a retriggerable monostable pulse with an identical length and a no-pulse period, set in such a way that the length of a pulse, referred to the sum of the length of the pulse and of the following no-pulse period, constitutes 90% and more in terms of order of magnitude, in which method the signal is used for influencing the charge state of a storage component (Cg) by virtue of the fact that the storage component (Cg) is charged and discharged asymmetrically with a respective retriggerable monostable pulse and a following no-pulse period of the signal (Um), in such a way that discharging occurs substantially more quickly than charging, and in which method the change in the charge state of the storage component (Cg) is used as a control variable for controlling the fan (V).

2. Circuit arrangement for controlling fans (V) having an evaluation circuit (AS) for deriving control pulses from the waveform of the input current of the fan (V) as a replacement for the signals of a speed counter for setting the operating state of the fan (V) by means of the time intervals between the control pulses, in which circuit arrangement a pulse-generator circuit (IS) is provided, which generates from a respective control pulse a retriggerable monostable pulse of identical length in each case, with the result that, in the steady state of the control of the fan (V), a signal (Um) comprising the monostable pulses with no-pulse periods present between them is produced, set in such a way that the length of such a pulse, referred to the sum of the length of the pulse and of the following no-pulse period, constitutes 90% and more in terms of order of magnitude, in which circuit arrangement an asymmetrical resistance circuit (R1, R2, D) which brings about substantially faster discharging than charging is provided, which resistance circuit (R1, R2, D) is arranged between the pulse-generator circuit (IS) and a storage component (Cg), and in which circuit arrangement an amplifier circuit (T) is provided which is connected to the storage component (Cg) and is also connected to the fan (V), in such a way that changes in charge state of the storage component (Cg) as a consequence of a fan (V) which is running at varying speed act with such a sign on the input current of the fan (V) that the respective change in charge state of the storage component (Cg) is cancelled out.

3. Circuit arrangement as claimed in Claim 2, characterized in that the pulse-generator circuit (IS) is connected to components (Ct, Rth) by means of which the length of the retriggerable monostable pulses can be set.

## Revendications

1. Procédé de régulation de ventilateurs (V), de la forme de courbe du courant d'entrée duquel sont dérivées des impulsions de commande en guise de substitution aux signaux d'un compteur de la vitesse de rotation, dans lequel, en partant d'une vitesse de rotation nominale prescrite du ventilateur (V), les impulsions de contrôle dérivées sont transformées en un signal (Vm) présentant, pour chaque impulsion de commande, une impulsion monostable re-déclenchable de même longueur et une pause, en un réglage tel que la longueur d'une telle impulsion, rapportée à la somme des longueurs de l'impulsion et de la pause qui suit, représente, en ordre de grandeur, 90 % et plus, dans lequel le signal est utilisé pour agir sur l'état de charge d'une composante (Cg) d'accumulateur, de façon que, avec une impulsion monostable chaque fois re-déclenchable et une pause suivante du signal (Vm), la composante (Cg) est chargée et déchargée, dissymètriquement de manière à être beaucoup plus rapidement déchargée que chargée, et dans lequel la variation de l'état de charge de la composante (Cg) d'accumulateur est utilisée comme valeur de commande pour la régulation du ventilateur (V).

2. Circuit de régulation de ventilateurs (V) comprenant un circuit d'exploitation (AS) pour la dérivation d'impulsions de commande de la forme de courbe du courant d'entrée du ventilateur (V), en guise de substitution aux signaux d'un compteur de la vitesse de rotation, pour régler l'état de fonctionnement du ventilateur (V) à l'aide d'intervalles de temps séparant les impulsions de commande,
dans lequel il est prévu un circuit (IS) générateur d'impulsions qui, de chaque impulsion de contrôle, génère une impulsion monostable re-déclenchable, de même longueur; avec le résultat que, dans l'état transitoire de régulation du ventilateur (V), un signal (Um), constitué par les impulsions monostables avec pauses intercalaires entre elles, est donné avec un réglage tel que la longueur d'une telle impulsion, par rapport à la somme des longueurs de l'impulsion et de la pause qui suit, représente, en ordre de grandeur, 90 % et plus , dans lequel il est prévu un circuit dissymétrique de résistances ( R1, R2, D) provoquant une décharge sensiblement plus rapide que la charge et intercalé entre le circuit (IS) générateur d'impulsion et une composante (Cg) d'accumulateur, et dans lequel il est prévu un circuit amplificateur (T) raccordé à la composante (Cg) d'accumulateur d'une part et relié d'autre part au ventilateur (V) de telle sorte que les variations de l'état de charge de la composante (Cg) d'accumulateur agissent comme conséquence du fonctionnement à une vitesse irrégulière d'un ventilateur (V), avec un signe de polarité tel sur le courant d'entrée du ventilateur, que la variation respective de l'état de charge de la composante (Cg) d'accumulateur est décroissante

3. Circuit selon la revendication 2 , caractérisé par le fait que,
le circuit (IS) générateur d'impulsions est raccordé à des composants (Ct, Rth), par lesquels il est possible d'effectuer un réglage de la longueur des impulsions monostables re-déclenchables.
